# EUROPÄISCHE PATENTANMELDUNG

(11) **EP 0 803 961 A1**
(43) Veröffentlichungstag der Anmeldung: **29.10.1997**
(21) Anmeldenummer: 97106417.5
(22) Anmeldetag: 18.04.1997
(51) Int. Cl.: H02J 7/32, H02J 7/35

(54) **Multiblock-Robot System**

(30) Priorität: 22.04.1996 DE 19615943
(71) Anmelder: Kochanneck, Uwe, D-44145 Dortmund (DE)
(72) Erfinder: Kochanneck, Uwe, D-44145 Dortmund (DE)

(57) **Zusammenfassung**

Bei einem Multiblock-Robot System sollen die Vorteile der flexiblen Multiachsen-Anwendung durch Multiblock-Normteile, für die kostengünstige Energiegewinnung aus Sonnen- und Windkraft, die Energiespeicherung und die Energie-Abgabe, genutzt werden. Zur Lösung dieser Aufgabe ist gemäß der Erfindung vorgesehen, daß Multiblock Normteile (1) gebildet werden, die aus Flanschaufsteckgehäusen (9') mit integrierten Solareinheiten und Aufsteckflanschen (27,27') bestehen und auf Zentralgehäuse (9) aufgesteckt werden, die Einbauelemente der Solarelektronik und Spannungswandlern beinhalten und an den Außenkanten und auf der Rückseite mit Drehflansch-Steckverbindungen (2) ausgerüstet sind, daß die Multiblock Normteile (1) mit Solareinheiten und Multiblock Gelenkarmen kombiniert werden, mit Flanschaufsteckgehäusen (9') mit zentraler, vertikaler Stützfunktion, mit horizontalen Verbund-Flanschaufsteckgehäusen (9'), mit Multiblock Gelenkrahmen die aus Flanschaufsteckgehäusen (9') mit Aufsteckflanschen (27) horizontal und vertikal zueinander zusammengesteckt werden, außerdem mit Flanschaufsteckgehäusen (9') mit integrierten Batterieeinheiten, die hintereinander aufgesteckt werden, Batterielinien bilden und sich selbstätig durch Magnetschalter in den Drehflansch-Steckverbindungen (27,27') beim Batterieaustausch entriegeln und verriegeln, mit Multiblock-Batteriespendern und mit Multiblock-Batteriewechslern die eine Vielzahl von Batterielinien aufnehmen, die außerdem mit Flanschaufsteckgehäusen (9') mit integrierten Beleuchtungskörpern kombiniert werden, außerdem mit Flanschaufsteckgehäusen (9') mit integrierten Windrotoren mit horizontaler und vertikaler Drehachse, außerdem mit Flanschaufsteckgehäusen (9') mit integrierter Steuerungs-Computereinheit und mit Flanschaufsteckgehäusen (9') mit integrierter Sensor- und Steuetungselektronik und in der Kombination Einzelner oder Vielfacher dieser Multiblock Komponenten, durch Aufstecken auf die gegenseitigen Drehflansch-Steckverbindungen (2,27,27'), autonome, selbststeuernde Multiblock-Energiestationen für Solar- und Wind-Energiegewinnung, Speicherung und Energie-Abgabe bilden, die sich selbstätig mit den Solaroberflächen und den Wind-Rotorblättern immer lotrecht zum jeweiligen Sonnenstand und der jeweiligen Windrichtung ausrichten.

## Beschreibung

Die Erfindung betrifft ein Multiblock-Robot System für die Energiegewinnung aus Sonnen- und Windkraft, die Energie-Speicherung und die Energie-Abgabe. Gemäß DE 40 30 119 C2 ist ein Multiblock-Robot System bekannt. Diese Anordnung erbringt den Vorteil, daß zielgerichtete Robot-Gesamtsysteme zu standardisierten, annähernd baugleichen Multiblock-Normteilen aufgelöst werden, die mit minimalem Aufwand in Entwicklung und Konstruktion erstellt werden können und mit wenigen Handgriffen von den Anwendern selbst für das ursprünglich angestrebte Wirkungsspektrum eingesetzt oder zu anderen Robot-Systemlösungen zusammengesteckt werden können. Ferner ist gemäß DE 41 41 241 A1 ein Multiblock-Robot System bekannt, das die Vorteile des flexiblen Multiachsen-Robot Systems in der Funktion und Anwendungsflexibilität und in der Anwendungsbreite noch erweitert und dabei gleichzeitig die Baumaße reduziert und außerdem die systemkompatible und funktionsfähige externe Anwendung ermöglicht. Außerdem ist gemäß DE 195 17 852 A1 ein Multiblock-Robot System bekannt, bei dem die Standardisierung und wirtschaftliche Nutzungsfähigkeit weiter gesteigert und gleichzeitig die Benutzerflexibilität zusätzlich erhöht wird. Weiterhin sind multiblock-systemfremde Sonnen- und Windenergiesysteme bekannt, die auch Richtungseinstellungen erlauben, die jedoch in Relation zum Aufstellflächenbedarf, keine sehr hohe Energiegewinnung bieten und aufgrund ihrer individuellen Auslegungen und relativ geringen Standardisierungs- und Normungstiefe nicht sehr kostengünstig sind und erschwerend durch individuelle Anschluß- und Montagetechniken, in der Regel nur durch Fachspezialisten mit größerem zeitlichen und kostenträchtigen Zusatsaufwand erfolgen kann. Außerdem erscheint die Speicherung und Bereitstellung der Energie und kostengünstige Verteilung, für Verbraucher nicht sehr attaktiv:

Aufgabe der vorliegenden Erfindung ist es, durch die Einführung einer geringen Anzahl zusätzlicher Multiblock-Normteile für die kostengünstige und umweltschonende Engergiegewinnung bei möglichst geringem Aufstellflächenbedarf und durch die Energie-Bereitstellung für Multiblock-Robotssysteme, Multiblock-Elektro-Straßenfahrzeuge und das öffentliche Netz, die Vorteile dieser flexiblen Multiachsen-Robot Systeme durch hohe Stückzahlen, in der Standardisierung, wirtschaftlichen Herstellung, Funktionalität, und Anwendungsbreite, noch zu erweitern. Zusätzlich sollen die Möglichkeiten der schnellen Multiblock-Normteil Installation durch wenige Handgriffe, auch von Anwendern ohne technische Vorkenntnisse genutzt werden können und die weitreichende Benutzerflexibilität auch für die Energiegewinnung und Bereitstellung unter veränderten, saisonal bedingten Wetteränderungen, zu einem sehr wirtschaftlichen, CO2 freien Energiesystem führen und einen kontinuierlich hohen Energienutzungsgrad, durch jederzeit veränderbare und schnell anpaßbare Normteilkombinationen gewährleisten.

Dies ist gemäß der Erfindung dadurch erreicht, daß Multiblock Normteile gebildet werden die aus Flanschaufsteckgehäusen mit integrierten Solareinheiten und Aufsteckflanschen bestehen und auf Zentralgehäuse aufgesteckt werden, die Einbauelemente der Solarelektronik und Spannungswandlern beinhalten und an den Außenkanten und auf der Rückseite mit Drehflansch-Steckverbindungen ausgerüstet sind, daß die Multiblock Normteile mit Solareinheiten und Multiblock` Gelenkarmen kombiniert werden, mit Flanschaufsteckgehäusen mit zentraler, vertikaler Stützfunktion, mit horizontalen Verbund-Flanschaufsteckgehäusen, mit Multiblock Gelenkrahmen die aus Flanschaufsteckgehäusen mit Aufsteckflanschen horizontal und vertikal zueinander zusammengesteckt werden, außerdem mit Flanschaufsteckgehäusen mit integrierten Batterieeinheiten, die hintereinander aufgesteckt werden, Batterielinien bilden und sich selbstätig durch Magnetschalter in den Drehflansch-Steckverbindungen beim Batterieaustausch entriegeln und verriegeln, mit Multiblock-Batteriespendern und mit Multiblock-Batteriewechslern die eine Vielzahl von Batterielinien aufnehmen, die außerdem mit Flanschaufsteckgehäusen mit integrierten Beleuchtungskörpern kombiniert werden, außerdem mit Flanschaufsteckgehäusen mit integrierten Windrotoren mit horizontaler und vertikaler Drehachse, außerdem mit Flanschaufsteckgehäusen mit integrierter Steuerungs-Computereinheit und mit Flanschaufsteckgehäusen mit integrierter Sensor- und Steuerungselektronik und in der Kombination Einzelner oder Vielfacher dieser Multiblock Komponenten, durch Aufstecken auf die gegenseitigen Drehflansch-Steckverbindungen, autonome, selbststeuernde Multiblock-Energiestationen für Solar- und Wind-Energiegewinnung, Speicherung und Energie-Abgabe bilden, die sich selbstätig mit den Solarobertlächen und den Wind-Rotorblättern immer lotrecht zum jeweiligen Sonnenstand und der jeweiligen Windrichtung ausrichten.

Hiermit ist gegenüber dem Stand der Technik erreicht, daß die Vielfalt, Funktion und wirtschaftliche Herstellung der Baugruppen der Multiblock-Robots und anderer selbstoperierender Multiblock-Multiachsen-Systeme durch Erschließung eines neuen, großen Anwendungsbereiches, noch gesteigert wird. Außerdem wird außen operierenden Multiblock-Multiachsen Systemen ein Energie-Erzeugungs- und Versorgungssystem mit hohem Wirkungsgrad bei geringem Aufstellungsflächenbedarf an beliebigen Stützpunkten zur Verfügung gestellt, das von Anwendern ohne technische Vorkenntnisse und auch von selbstoperierenden Multiblock Robotern leicht, durch reine Aufsteckoperationen aufgebaut und verändert werden kann und das in variablen Größen, als kleine Energiestation für Einzelbenutzer und auch für selbstoperierende Roboter überall nutzbar ist, als erweiterte, mittlere Energiestation für unterschiedliche Benutzer von Elektrofahrzeugen, auch an Straßenrändern und Tankstellen aufstellbar ist und in zusammengefaßten Systemen, zu einem großen und leistungsfähigen, CO2 reduzierenden Verbund für Energie-Erzeugung- und Versorgung, mit Verbindung zum öffentlichen Stromnetz, ausgebaut werden kann.

Ausgestaltungen der Erfindung sind in den Unteransprüchen genannt.

Die Erfindung wird im folgenden anhand von Ausführungsbeispielen, mit Bezug auf die Zeichnung näher erläutert. In dieser zeigt:
Fig. 1 die Vorderansicht eines Multiblock Robot Systems, das eine mobile Multiblock-Robot Energiestation, mit Solar-Energie Gewinnung, Speicherung und Energie-Abgabe mit mittlerer Leistungskapazität darstellt und die in Richtung der Pfeile aus einzelnen Multiblock-Normteilen zusammengesteckt wird.
Fig. 2 die Seitenansicht einer mobilen Multiblock-Robot Energiestation mit Solar-Energie-Gewinnung, Speicherung und Energie-Abgabe mit mittlerer Leistungskapazität und Multiblock-Verbindung zu weiteren Multiblock-Energiestationen,
Fig. 3 Die Vorderansicht einer ortsfesten, in Pfeilrichtung zusammengesteckten, Multiblock-Robot Energiestation von mittlerer Leistungskapazität, mit kombinierter Solar- und Wind-Energie-Gewinnung Speicherung und Energie-Abgabe mit Batteriespender für den manuellen Batterieaustausch,
Fig. 4 Die Vorderansicht einer ortsfesten Multiblock-Robot Energiestation mit kombinierter Solar- und Wind-Energie-Gewinnung, Speicherung und Energie-Abgabe mit selbstoperierendem Batteriewechsler, und erweiterter Leistungskapazität gegenüber der Multiblock-Robot Energiestation gemäß der Fig. 3,
Fig. 5 Die Vorderansicht einer ortsfesten Multiblock-Robot Energiestation mit kombinierter Solar- und Wind-Energie-Gewinnung, Speicherung und Energie-Abgabe, mit mittlerer Leistungskapazität,
Fig. 6 Die Vorderansicht einer ortsfesten Multiblock-Robot Energiestation mit kombinierter Solar- und Wind-Energie-Gewinnung, Speicherung und Energie-Abgabe, und erweiterter Leistungskapazität gegenüber der Multiblock-Robot Energiestation gemäß der Fig.4 und 5,
Fig. 7 Die perspektivische Darstellung und Umrüstung einer vorhandenen Wind-Energieanlage, zu einer stationären Multiblock-Robot Energiestation mit kombinierter Solar- und Wind-Energie-Gewinnung, Speicherung und Energie-Abgabe und erweiterter Leistungskapazität gegenüber der Multiblock-Robot Energiestation gemäß der Fig. 6, mit je zwei Flanschaufsteckgehäusen mit integrierten Solareinheiten pro Multiblock-Gelenkrahmen,
Fig. 8 Die Vorderansicht einer ortsfesten Multiblock-Robot Energiestation mit kombinierter Solar- und Wind-Energie-Gewinnung, Speicherung und Energie-Abgabe, mit einem Flanschaufsteckgehäuse mit Solareinheiten pro Multiblock-Gelenkrahmen und einem abgesetzt angeordneten, selbstoperierenden Batteriewechsler,

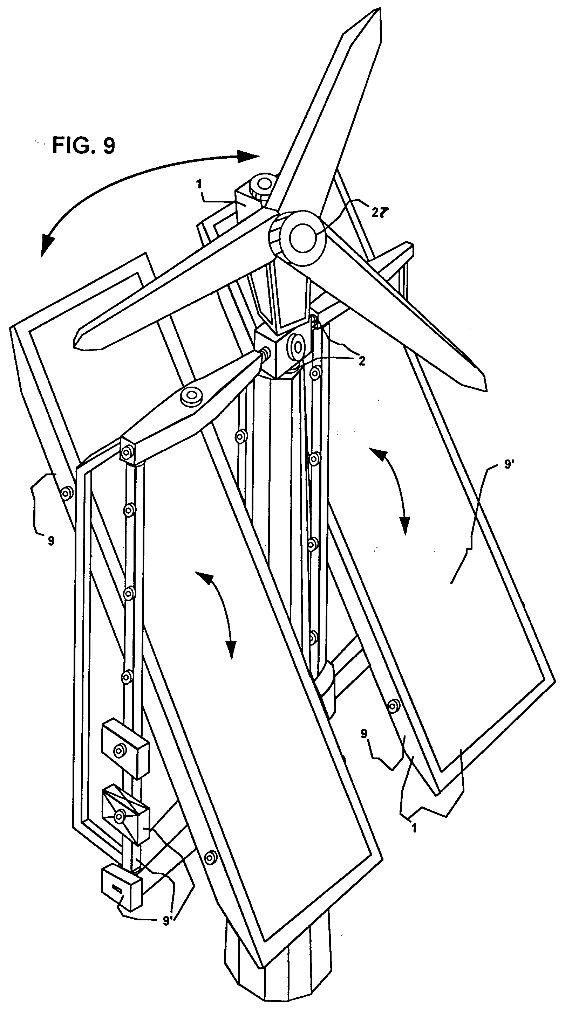

Fig. 9. Die perspektivische Darstellung und Umrüstung einer vorhandenen, Wind-Energieanlage zu einer stationären Multiblock-Robot Energiestation mit kombinierter Solar- und Wind-Energie-Gewinnung, Speicherung und Energie-Abgabe, mit je einem Flanschaufsteckgehäuse mit integrierten Solareinheiten pro Multiblock-Gelenkrahmen.

### Fig. 1

Jedes Multiblock Robot System, das die mobile Multiblock-Robot Energiestation mit Solar-Energie Gewinnung, Speicherung und Energie-Abgabe mit mittlerer Leistungskapazität umfaßt, ist ein selbstoperierender, ortsveränderlicher Energiestützpunkt. Die Verfahrbarkeit wird durch Multiblock Normteile 1 ermöglicht, die Flanschaufsteckgehäuse 9' besitzen und als Gurt-Fahreinheiten, alternativ als Rad-Fahreinheiten, ausgebildet sind und auf den außen liegenden Drehflansch-Steckverbindungen 2 und vor Kopf des mittig installierten Multiblock Normteiles 1 mit Bilderkennungs-Bewegungs- und Infrarot Steuerungs-Sensoreinheiten ausgerüstet sind. Über dem mittig installierten Multiblock Normteil 1 der Gurt-Fahreinheiten ist ein Flanschaufsteckgehäuse 9' aufgesteckt, das eine Steuerungs-Computereinheit umfaßt. Außerdem nimmt dieses Multiblock Normteil 1 einen Multiblock-Gelenkrahmen auf, der aus zwei baugleichen vertikalen Flanschaufsteckgehäusen 9' und zwei baugleichen horizontalen Flanschaufsteckgehäusen 9' zusammengesteckt wird und der durch die Antriebswicklungen des mittig installierten Multiblock Normteils 1, über die eigene, vertikale Mittelachse frei schwenkbar ist. Die vorliegende mobile Multiblock-Robot Engergiestation nimmt vier Multiblock Normteile 1 mit Flanschaufsteckgehäusen 9' mit integrierten Solareinheiten auf, die mit Aufsteckflanschen 27 auf versenkte Aufsteckflansche 27' der Zentralgehäuse 9 aufgesteckt werden und im zusammengesteckten Zustand, ein Multiblock Normteil 1 bilden. Auf die Drehflansch-Steckverbindungen 27, seitlich der vertikalen Flanschaufsteckgehäuse 9', werden Flanschaufsteckgehäuse 9' mit integrierten Batterieeinheiten horizontal aufgesteckt. Auf die zentrale Drehflanschsteckverbindung 27 des Multiblock-Gelenkrahmens sind zwei weitere Flanschaufsteckgehäuse 9' mit integrierten Batterieeinheiten vertikal aufgesteckt. Darüber ist, in eingeschwenkter Seitenansicht dargestellt, ein Gelenkarm aufgesteckt, der aus zwei Multiblock Normteilen 1 zusammengesteckt ist und der ein frei schwenkbares Multiblock Normteil 1 mit Flanschaufsteckgehäuse 9' mit integrierter Solareinheit aufnimmt. Für diese Einheit ist zentral in der Solaroberfläche eine weitere Drehflansch-Steckverbindung 27, zur Aufnahme eines Flanschaufsteckgehäuses 9' mit integrierter Antennen- und Fernsteuersignaleinheit, vorgesehen. Die Zentralgehäuse 9 der Multiblock Normteile 1 die mit Flanschaufsteckgehäusen 9' mit integrierter Solareinheit zusammengesteckt sind, besitzen an den Außenkanten und zentral auf der rückseitigen Front, Drehflansch-Steckverbindungen 2 mit innen liegenden Strom- und Kommunikationskanälen und aufgesetzten Antriebswicklungen. Jedes Zentralgehäuse 9 der Multiblock Normteile 1 für Flanschaufsteckgehäuse 9' mit integrierten Solareinheiten erhält außerdem Einbauelemente für Batterie-Ladeelektronik, Spannungswandler und die Steuerung für die eigenen Antriebswicklungen. Dadurch ist jedes Multiblock Normteil 1 mit Flanschaufsteckgehäuse 9' mit integrierter Solareinheit, ein autonomer Sonnen-Energieumwandler und in Kombination mit Multiblock Gelenkrahmen und Multiblock Gelenkarmen, zusätzlich mehrachsig schwenkbar, mit Rotationsmöglichkeit über die horizontale, vertikale und zentrale Achse, sofern die horizontalen, vertikalen oder aber die zentrale, rückseitige Drehflansch-Steckverbindung 2 als aktive Steckverbindungen ausgewählt werden und erreicht je nach dem Tagesstand der Sonne, immer die lotrechte, optimale Energiegewinnungs-Ausrichtung zur Sonneneinstrahlung. Die Installation kann alleinstehend, in der Kombination mit beliebigen Multiblock Normteilen 1 oder Flanschaufsteckgehäusen 9', oder aber innerhalb eines Multiblock Gelenkrahmens erfolgen. Das gilt auch für die Flanschaufsteckgehäuse 9' mit integrierten Batterieeinheiten. Auch diese besitzen die Multiblock Robot systemtypischen Steckerbuchseneinheiten mit Einraststeckern, federbelasteten Klemmhebeln und Magnetverriegelungen auf einer Seite und auf der gegenüberliegenden Seite, zueinander kompatible Steckereinheiten, die durch die Batterie-Mittelachse geführten Strom- und Kommunikationskanäle miteinander verbunden sind und werden hier auf Drehflansch-Steckverbindungen 27 des Multiblock Gelenkrahmens aufgesteckt, der von Anwendern für den Austausch erreichbar ist, oder aber für die eigene Systemversorgung an beliebigen Drehflansch-Steckverbindungen 2,27,27', in der Nähe der zu versorgenden Systemeinheiten. Die Flanschaufsteckgehäuse 9' mit integrierten Batterieeinheiten werden, abgesichert durch die beidseitigen Einraststecker und Steckerbuchsen mit den federbelasteten und Magnetschalter gesicherten Klemmhebeln, zu mehreren hintereinander zu Batterielinien aufgesteckt. Die Aufsteckung kann in horizontaler und vertikaler Lage erfolgen. Der fertige Zusammenbau der vorliegenden mobilen Multiblock-Robot Energiestation besitzt die Eigenschaft, alle installierten Solareinheiten genau lotrecht zum jeweiligen Sonnenstand ausrichten zu können. Die vertikale Anpassung erfolgt durch Schwenkung des gesamten Multiblock Gelenkrahmens. Die horizontale Anpassung der Multiblock Normteile 1 mit Flanschainfsteckgehäusen 9' mit integrierter Solareinheit innerhalb des Multiblock-Gelenkrahmens, erfolgt durch Schwenkung der einzelnen Multiblock Normteile 1 mit Flanschaufsteckgehäusen 9' mit integrierter Solareinheit in den gemeinsamen Gelenkpunkten, durch die Antriebswicklungen in den Zentralgehäusen 9 der Multiblock Normteile 1 und für das Multiblock Normteil 1 mit Flanschaufsteckgehäusen 9' mit integrierter Solareinheit und zusätzlicher Antennen- und Fernsteuersignaleinheit in Kopfposition, durch den Multiblock-Gelenkarm. Der in den Solarzellen der Solareinheiten erzeugte Strom wird der Batterie Ladeelektronik und den Spannungswandlern in den Zentralgehäusen 9 zugeführt und über, die das Gesamtsystem der Multiblock Normteil 1 Installation durchlaufenden Strom- und Kommunikationskanäle, die zu den einzelnen Drehflansch-Steckverbindungen 2,27,27' führen, den angeschlossenen Batterieeinheiten und den integrierten Systemeinheiten zugeführt. So zu den Antriebswicklungen für die Schwenkoperationen und die Antriebswicklungen für die Gurt-Fahreinheiten. Gleichzeitig hat jede Drehflansch-Steckverbindung 2,27,27', von einem Ende des Strom- und Kommunikationskanals bis zum gegenüberliegenden Ende, im Kernbereich Steckdosen- und die gegenüberliegende Seite Steckerfunktion und kann von Verbrauchern direkt zur Stromabnahme über handelsübliche Stecker- und Kabelverbindungen genutzt werden. Die Antennen- und Fernsteuersignaleinheit ermöglicht die Signalübermittlung von und zu Fernsteuerungseinheiten. Die Steuerung des Gesamtsystems, wie Überwachung der lotrechten Ausrichtung der Solareinheiten, Batterie Ladezustand, Verarbeitung der Fernsteuerung-Signalverarbeitung, Auswertung der Daten der Bilderkennungs- und Bewegungssensoren erfolgt durch den Multiblock-Steuerungs-Computer. Die Steuerung erfolgt lokal über die Flanschaufsteckgehäuse 9' mit integrierten Infrarot Steuerungseinheiten oder entfernt über das Flanschaufsteckgehäuse 9' mit integrierter Antennen- und Fernsteuersignaleinheit. Bei kleineren Multiblock-Robot Energiestationen wird auf eine beliebige Drehflansch-Steckverbindung 2,27,27', lediglich ein Flanschaufsteckgehäuse 9' mit integriertem Zeitschaltwerk aufgesteckt, das die Sonnenstandsadaptierungen steuert. Viele Multiblock Normteile 1 und Flanschaufsteckgehäuse 9' und die für diese Teile gültigen Rastermaße und Leistungdaten, die für die mobile Multiblock-Robot Energiestation verwendet werden, sind ohne Veränderung, direkt mit den Multiblock Normteilen 1 und Flanschaufsteckgehäusen 9' die für Multiblock Roboter und für Multiblock Elektrofahrzeuge eingesetzt werden, austauschbar. Insbesondere sind die Flanschaufsteckgehäuse 9' mit Batterieeinheiten, identisch mit den Batterieeinheiten für Multiblock Roboter und Multiblock Elektrofahrzeuge. Insofern hat für diese Multiblock Systeme, die mobile Multiblock-Robot Energiestation einen wichtigen Stützpunktcharakter. So speziell für selbstoperierende Multiblock Roboter mit Außenaufgaben auf der Erde und ganz besonders bei Weltraumprojekten, unter Einbezug von selbstoperierenden Multiblock Elektrofahrzeugen. Systemeinheiten die ohne Zugriff und Versorgung durch stationäre Energiestationen operieren müssen, können durch die mobile Multiblock-Robot Energiestation, einsatznah bedient und versorgt werden. Die einzelnen Normteile sind gewichtsleicht und von handtierbarer Größe. Insofern kann der Aufbau der mobilen Energiestation, sowie der Austausch von Batterien durch die Multiblock-Roboter selbst, schnell und leicht durchgeführt werden, da lediglich Aufsteck- oder Abziehoperationen hiertür erforderlich sind. Die Ersatzteilhaltung und das Teilespektrum wird niedrig gehalten, da die Normteile für die mobile Multiblock Robot Energiestation, für Multiblock Roboter und Multiblock Elektrofahrzeuge, immer baugleich, weitgehend identisch und austauschbar sind.

### Fig. 2

Diese mobile Multiblock-Robot Energiestation wird durch die horizontalen Verbund-Flanschaufsteckgehäuse 9' in Boden- und Kopfposition mit einer weiteren mobilen Multiblock-Robot Energiestation zu einem, um die doppelte Kapazität erweiterten, Energie-Gesamtsystem zusammengefaßt. Die horizontalen Verbund-Flanschaufsteckgehäuse 9' können mit ihren horizontalen und vertikalen Drehflansch-Steckverbindung 27, ebenfalls wahlfrei Multiblock-Komponenten und Baugruppen aufnehmen. Die horizontalen Verbund-Flanschaufsteckgehäuse 9' behindern nicht das freie Einschwenken und Ausrichten der Solareinheiten und Windrotoren und zugehörigen Baugruppen innerhalb der miteinander verbundenen Multiblock-Robot Energiestationen. Durch die Verbindung mit den horizontalen Verbund-Flanschaufsteckgehäuse 9' wird neben dem Verbinden der Strom- und Kommunikationskanäle der einzelnen Multiblock-Energiestationen auch eine horizontale, gegenseitige Abstützung erzielt. Auch bei der vorliegenden mobilen Multiblock-Robot Energiestation ist ein Multiblock Gelenkrahmen mit vier Multiblock Normteilen 1 mit Flanschaufsteckgehäusen 9' mit integrierter Solareinheit vorgesehen. Die Zentralgehäuse 9 der Multiblock-Gelenkrahmen sind, entsprechend der Anzahl von Solareinheiten die pro Gelenkrahmen vorgesehen sind, seitlich mindestens mit einer gleichen oder größeren Anzahl von Drehflansch-Steckverbindungen 2 ausgerüstet und jeweils um eine Drehflansch-Steckverbindung 2 treppenförmig versetzt, vertikal übereinander im Multiblock Gelenkrahmen angeordnet, um die gesamte Solarzellen-Oberfläche für Sonneneinstrahlung möglichst groß gestalten zu können, dabei jedoch gegenseitige Schattenwirkung der vier Solareinheiten zueinander, bei lotrechter Ausrichtung auf den Sonnenstand auszuschließen. Die Schwenkungsrichtung der Multiblock Normteile 1 mit Flanschaufsteckgehäusen 9' mit integrierter Solareinheit innerhalb des Multiblock Gelenkrahmens, ist durch die gebogenen Pfeillinien dargestellt.

### Fig. 3

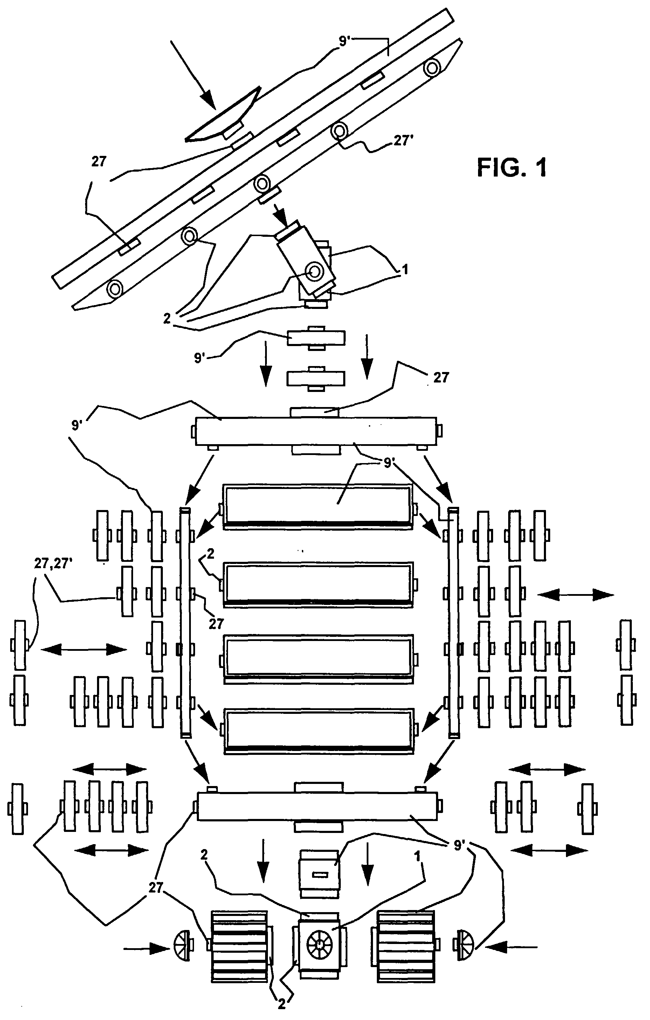

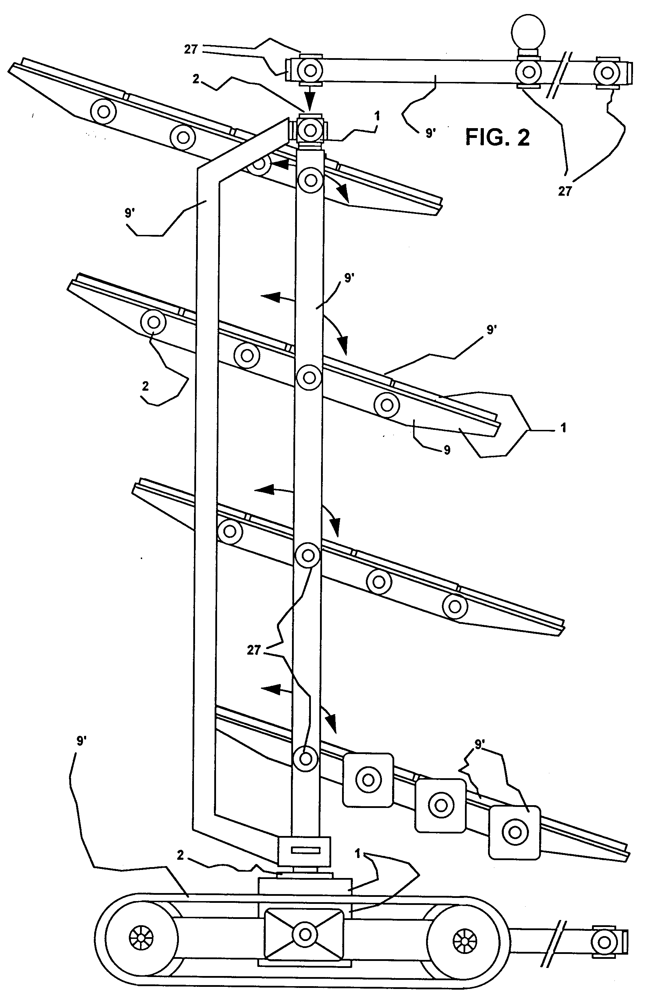

Die mobilen Multiblock-Robot Energiestationen gemäß der Fig. 1 und 2 können jederzeit zu stationären Multiblock-Robot Energiestationen umgewandelt werden, indem die installierten Multiblock Gurt- oder Rad- Fahreinheiten abgenommen werden und die installierten Energieeinheiten auf ein stationär installiertes Multiblock Normteil 1 aufgesteckt werden, auf einen stationären Multiblock Gelenkarm, oder auf ein Multiblock-Flanschaufsteckgehäuse 9', das als mittige, zylindrische vertikale Stützfunktion eingesetzt wird und auf eine Drehflansch-Steckverbindung 2,27,27' eines Fundamentsockels aufgesteckt ist, über die eine Verbindung zum öffentlichen Netz hergestellt wird. Im vorliegenden Anwendungsfall nimmt die Vertikalstütze drei Multiblock Baugruppen auf, in Bodenhöhe, für Benutzer und Multiblock Roboter erreichbar, einen Multiblock-Batteriespender, für den manuellen Batterieaustausch, bestehend aus einem Multiblock 1 mit vertikalen und horizontalen Drehflansch-Steckverbindungen 2 und links und rechts mit je einem Multiblock Gelenkrahmen, der jeweils nur außen ein vertikales Flanschaufsteckgehäuse 9' besitzt. Dieses Flanschaufsteckgehäuse 9' nimmt links und rechts Flanschaufsteckgehäuse 9' mit integrierten Batterieeinheiten auf. Die unteren, horizontalen Flanschaufsteckgehäuse 9' nehmen jeweils ein Flanschaufsteckgehäuse 9' mit Steuerungs-Elektronik für Sensorik auf und werden auf Flanschaufsteckgehäuse 9' mit integrierten-Dreh-Stützrollen aufgesteckt, die um die zylindrische Vertikalstütze herum geführt werden. Für jede linke und rechte, horizontal zusammengesteckte Batterielinie, sind optische Ladestandsanzeigen vorgesehen, sowie das Flanschaufsteckgehäuse 9' mit integrierter Steuerungs-Computereinheit. Dieses ist mit einem Scheckkarten-Lesegerät ausgerüstet. Benutzer die eine leere Batterieeinheit gegen eine frisch aufgeladene Batterieeinheit austauschen wollen, stecken Ihre Scheck- bzw. Codekarte in den Computerschlitz, zur Prüfung Zugriffsberechtigung durch die Steuerungs-Computereinheit, dann ihr leeres Flanschaufsteckgehäuse 9' mit integrierter Batterieeinheit auf eine Batterielinie die gelb, gleich Aufladezustand aufweist. Daraufhin wird von der Computereinheit die Magnetverriegelung der letzten Batterieeinheit der Batterielinie aufgehoben, die grün, gleich frisch geladen aufweist. Die gesamte links und rechts der zylindrischen Multiblock-Vertikalstütze in den beiden Multiblock-Gelenkrahmen angeordneten Batterieeinheiten sind vom Anwender von Hand um die Multiblock-Vertikalstütze herum zur Batterieabgabe und Entnahme, in jede Richtung schwenkbar und werden danach durch die Antriebswicklungen im Multiblock Normteil 1 in Kopfposition der zylindrischen Vertikalstütze, und Steuerung durch die Steuerungscomputereinheit, wieder selbstätig in die vorbestimmte Normallage zurückgeschwenkt. Die vertikale Drehflansch-Steckverbindung 2 des Multiblock Normteiles 1 in Kopfposition der zylindrischen Vertikalstütze, nimmt die zweite und dritte Multiblock Baugruppe auf. Diese bestehen aus zwei vertikal übereinander angeordneten Multiblock-Gelenkrahmen. Der untere, aufgesteckte Gelenkrahmen, trägt im Gegensatz zu den Gelenkrahmen der Fig. 1 und 2, nur ein Multiblock Zentralgehäuse 9 und Flanschaufsteckgehäuse 9' mit integrierter Solareinheit. Der obere Multiblock Gelenkrahmen nimmt ein Multiblock Normteil 1 auf, das ein zylindrisches Multiblock Zentralgehäuse 9 mit vertikalen Drehflansch-Steckverbindungen 2 und Generatorwicklungen besitzt und mit einem Flanschaufsteckgehäuse 9' verbunden ist, das einen Windrotor mit vertikaler Rotorachse integriert. Auf die vertikalen Außenseiten des Multiblock Gelenkrahmens sind je vier Flanschaufsteckgehäuse 9' mit integrierten Batterieeinheiten aufgesteckt, die als System-Batterieeinheiten zur eigenen, Gesamtsystem-Stromversorgung, auf dem System verbleiben. Weiterhin sind auf wahlfreie Drehflansch-Steckverbindungen 27 des oberen Multiblock Gelenkrahmens, fünf Flanschaufsteckgehäuse 9' mit integrierten Beleuchtungskörpern aufgesteckt. Die drei, in einer vertikalen Linie übereinander angeordneten Multiblock Baugruppen, Multiblock-Batteriespender, Multiblock-Solareinheiten und Multiblock-Windkraft-und Beleuchtungseinheiten, sind untereinander beliebig kombinierbar, können mit weiteren Multiblock Baugruppen zu einer Systemeinheit kombiniert werden, oder auch als allein stehende, abgesetzte Systemeinheit angewendet werden. Sie sind außerdem auch in den einzelnen Multiblock-Normteilen 1, von Drehflansch-Steckverbindung 2,27,27' zu Drehflansch-Steckverbindung 2,27,27' beliebig untereinander kombinierbar, oder aber mit energiesystemexternen Multiblock-Robot Anwendungen, wie Multiblock Robots und Multiblock Elektrofahrzeugen, austauschbar. So sind auch hier die Flanschaufsteckgehäuse 9' mit integrierten Batterieeinheiten, direkt und durch selbstoperierende Multiblock Robots selbst, zwecks Aufladung austauschbar oder, durch die Benutzer von Multiblock Elektrofahrzeugen. Die Anwendungsbreite reicht von der Aufstellung an beliebigen Orten, an Straßenrändern, an Tankstellen und auf Parkplätzen, in unterschiedlicher Kombination zwecks leichter und schneller Verfügbarkeit für Multiblock-Elektrofahrzeugbenutzer und somit zur Förderung der Anzahl von Multiblock-Elektrofahrzeugen im Straßenverkehr, sowie zur Batterie-Energieversorgung von selbstoperierenden Multiblock Robotern bei Außenarbeiten, wie beim Straßenbau oder bei Straßen-Reinigungsarbeiten.

### Fig.4

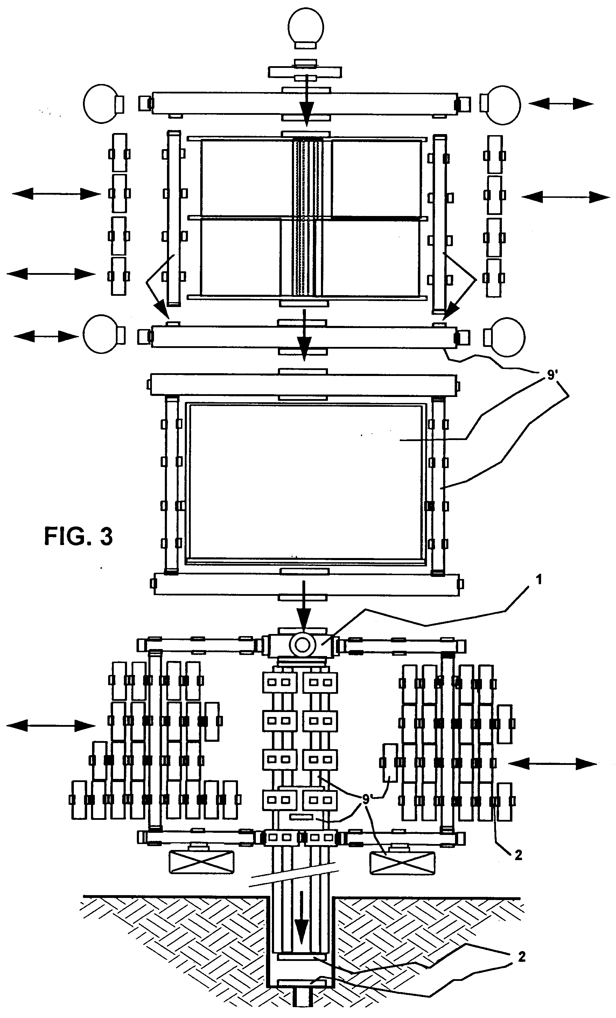

Diese ortsfeste Multiblock-Robot Energiestation besitzt zwei Multiblock Gelenkrahmen mit je vier Multiblock Normteilen 1 mit Flanschaufsteckgehäusen 9' mit integrierter Solareinheit und je eine Einheit in Kopfposition die mit der rückseitigen Drehflansch-Steckverbindung 2 auf Multiblock Gelenkarmen aufsitzen, und frei schwenkbar auf die Drehflansch-Steckverbindung 27 der horizontalen Flanschaufsteckgehäusen 9' der Multiblock Gelenkrahmen aufgesteckt sind. Die beiden Multiblock Gelenkrahmen sind mittig, in Kopfposition durch ein Multiblock Normteil 1 verbunden und frei horizontal schwenkbar. Vertikal zwischen den beiden mittig angeordneten Multiblock Normteilen 1 ist ein zylindrisches Flanschaufsteckgehäuse 9' mit vertikaler, bis zum Fundament reichender, zentraler Stützfunktion eingesetzt. Auf die Drehflansch-Steckverbindung 2 des Multiblock Normteiles 1 in Kopfposition ist außerdem ein Multiblock Normteil 1 mit Antriebs- und Generatorwicklungen im Zentralgehäuse 9 und mit einem Flanschaufsteckgehäuse 9' mit integriertem Windrotor mit horizontaler Drehachse vorgesehen. Die Solareinheiten und der Windrotor können gleichzeitig Batterieeinheiten laden oder Strom für die direkte Versorgung der eigenen Systemeinheiten liefern, oder aber getrennt, je nach vorherrschender Wetterlage, Wind- und Sonnenstand, für die Stromgewinnung wirksam werden. Außerdem ist im Bodenniveau ein selbstoperierender Multiblock-Batteriewechsler für Multiblock Elektrofahrzeuge installiert. Die Ausführung entspricht prinzipiell dem Multiblock-Batteriespender gemäß der Fig. 3. Die Entnahme erfolgt jedoch ohne manuellen Eingriff. Die Multiblock Elektrofahrzeuge sind mit Flanschaufsteckgehäusen 9' mit integriertem Steuerungs Computer für die Steuerung der gesamten Fahrzeugoperationen und Auswertung der aufgesteckten Multiblock-Sensorik ausgerüstet. Sie sind außerdem mit einem Scheckkarten-Leser ausgerüstet, der dem Scheckkartenleser der Multiblock Steuerungs-Computer gemäß der Fig. 3 entspricht. Die Multiblock Elektrofahrzeuge besitzen ein Flanschaufsteckgehäuse 9' mit integrierten Infrarot Bewegungssensoren und ein Flanschaufsteckgehäuse 9' mit integrierter Antennen- und Fernsteuersignaleinheit. Hierzu kommunizierende Infrarot Bewegungssensoren und Flanschaufsteckgehäuse 9' mit integrierter Antennen- und Fernsteuersignaleinheit befindet sich auch in Flanschaufsteckgehäusen 9' des Multiblock Batteriewechslers. Außerdem sind die Fahrzeuge mit Flanschaufsteckgehäusen 9' mit integrierten Batterie-Jalousien ausgerüstet, die selbstätig öffnen und schließen und die Batterien nach vorne in Fahrt-Richtung abdecken. Zum Batterieaustausch steckt der Fahrer des Multiblock Elektrofahrzeuges die Scheckkarte mit Zugangsberechtigung in den Scheckkartenleser seines, neben dem Lenkrad befindlichen Steuerungs-Computers und löst damit den selbstoperierenden Batterieaustausch aus. Die Multiblock-Normteile 1 des Elektrofahrzeuges fahren und führen das Fahrzeug genau positioniert und geleitet von den Infrarotsensoren und Telecommandos in Pfeilrichtung auf die Drehflansch-Steckverbindung 2 der Batterielinie, des sternförmig, um 90° versetzt, mit vier Batterielinien ausgeführten Batteriewechslers zu, lösen die Öffnung der Batterie Jalousien aus und geben die aufzuladenden Flanschaufsteckgehäuse 9' mit integrierten Batterien an eine Batterielinie ab die Aufladung zuläßt. Das Fahrzeug wird dann wieder um einige Zentimeter zurückgesetzt und der Batteriewechsler schwenkt um 90° zur Übergabe in Richtung des übernehmenden Fahrzeuges. Dieses wird dann wieder in Richtung der Batterielinie geführt und übernimmt ein aufgeladenes Flanschaufsteckgehäuse 9' mit integrierter Battereinheit. Der Bordcomputer überwacht die Fahroperationen und den Batterieaustausch einzelner Batterieeinheiten oder eines Batterieblocks mit mehrerern Einheiten gleichzeitig. Entsprechend werden die Magnetschalter in den Drehflansch-Steckverbindungen 27,27' mit Einraststeckern und Steckerbuchsen der Batterieeinheiten, zur Freigabe einzelner oder mehrerer Einheiten gesteuert. Infrarotsteuerungssignale zu den Sensoren an der Energiestation, lösen das Einschwenken des Batteriewechslers um 90° aus, für das Einschwenken der Batterielinie die Aufladung, d.h. Batterieabgabe zuläßt, bzw. die Batterielinie, die um 90° versetzt, Batterieübernahme zuläßt. Der Steuerungs-Computer gibt das Fahrzeug erst dann für den Fahrer zur Weiterfahrt frei, wenn der Batterieaustausch beendet und erfolgreich abgeschlossen ist. Dieses wird durch ein optisches und akustisches Signal im Fahrzeuginneren angezeigt.

### Fig. 5

Das zylindrische Flanschaufsteckgehäuse 9' mit Vertikalstützenfunktion, besitzt im Bodenbereich vier Drehflansch-Steckverbindungen 27, die vertikal in einer Linie übereinander gesetzt sind. Auf diese Drehflansch-Steckverbindungen 27 ist der Multiblock-Steuerungs-Computer mit Scheckkartenlesegerät aufgesteckt, sowie horizontal, drei Batterielinien, mit den zugehörigen optischen Ladestandsanzeigen. In Kopfposition ist ein Multiblock Normteil 1 mit horizontalen und vertikalen Drehflansch-Steckverbindungen 2 aufgesetzt. Hier sind horizontal, links und rechts, zwei Multiblock Gelenkrahmen aufgesteckt, die je zwei Flanschaufsteckgehäuse 9' mit integrierter Solareinheit aufnehmen, die ihrerseits selbst, mittig je ein Multiblock Normteil 1, bestehend aus einem Flanschaufsteckgehäuse 9' mit integriertem Windrotor mit vertikaler Rotationsachse und dem zugehörigen Zentralgehäuse 9 mit Generatorwicklungen, auf den innen geführten Strom- und Kommunikationskanälen aufnehmen. Unterhalb der Multiblock Gelenkrahmen ist je ein Flanschaufsteckgehäuse 9' mit integrierter Beleuchtungseinheit aufgesteckt. Die beiden Multiblock Gelenkrahmen werden seitlich an dem zentralen, zylindrischen Flanscharnfsteckgehäuse 9' mit Vertikalstützenfunktion, durch Flanschaufsteckgehäuse 9' mit integrierten-Dreh-Stützrollen, drehbeweglich abgestützt. Auf die vertikale Drehflansch-Steckverbindung 2 in zentraler Kopfposition sind vier Flanschaufsteckgehäuse 9, mit integrierten Batterieeinheiten aufgesteckt und darüber ein Flanschaufsteckgehäuse 9' mit integrierter Beleuchtungseinheit. Die gesamte obere Baugruppe, wird durch das Multiblock Normteil 1 in zentraler Kopfposition je nach Sonnenstand und Steuerungsinformation durch die Multiblock-Steuerungs-Computereinheit, um die Mittelachse eingeschwenkt. Die Einschwenkung um die horizontale Achse der Solareinheiten in den Gelenkrahmen, erfolgt analog der Fig. 1 bis 4, durch die Antriebswicklungen innerhalb der zugehörigen Zentralgehäuse 9. Der vorliegende Systemaufbau ist ebenfalls eine Art der kombinierten Sonnen-Wind-Energiegewinnung die ohne spezielle technische Vorkenntnisse des Systemanwenders durch diesen selbst einfach und schnell erweitert werden kann, indem auf die entsprechenden Drehflansch Steckverbindungen 2 die gleichen Baugruppen und ergänzende Multiblock-Normteile 1 hinzugefügt und in anderer Kombination aufgesteckt werden. Die Hinzufügung oder Entfernung von Solareinheiten oder Windrotoren erfolgt gemäß den saisonalen Wetterveränderungen und den Energie-Umsatzerwartungen. In Winterzeiten werden die Solareinheiten durch Windrotoren ausgetauscht. Im Sommer werden überwiegend Multiblock Solareinheiten eingesetzt. Die Multiblock Gelenkrahmen selbst müssen dabei nicht ausgetauscht werden, da die Solareinheiten und die Windrotoreinheiten in den Rastermaßen gleich sind, somit in die selben Gelenkrahmen passen und lediglich auf unterschiedliche Drehflansch-Steckverbindungen 2,27,27' aufgesteckt sind.

### Fig.6

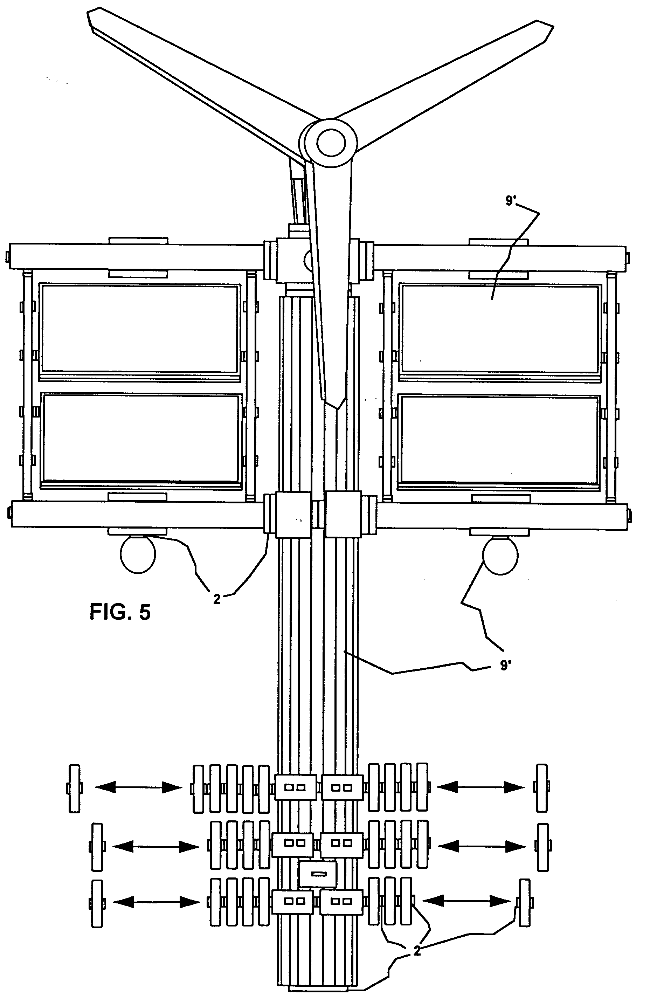

Die vorliegende stationäre Multiblock-Robot Energiestationen bedeutet eine Verdreifachung der Energiegewinnung im Verhältnis zum System gemäß der Fig. 5. Hier ist mittig ein Flanschaufsteckgehäuse 9' mit integriertem Windrotor, mit vertikaler Rotationsachse und dem zugehörigen Zentralgehäuse 9 mit Generatorwicklungen, zentral auf das kopfseitige Multiblock Normteil 1 aufgesetzt und übernimmt gleichzeitig zentrale Stützfunktion für die gesamte, oberhalb angeordnete Energiegewinnungseinheit. Zusätzlich zu den seitlich angeordneten Multiblock Gelenkrahmen mit den Solareinheiten ist oberhalb, leicht horizontal eingeschwenkt dargestellt, über die gesamte Breite dieser Einheiten, ein großflächiges Multiblock Normteil 1 mit Flanschaufsteckgehäuse 9' mit integrierten Solareinheiten aufgesteckt. Hierzu wurde die rückseitige Drehflansch-Steckverbindung mittels eines Multiblock Gelenkarmes, mittig auf die vertikale Drehflansch-Steckverbindung 2 des kopfseitigen Multiblock Normteiles 1 aufgesteckt. Um bei hohen Vertikal- und Horizontalkräften, Gelenkpunkte der Multiblock Normteile 1, deren Zentralgehäuse 9 und Flanschaufsteckgehäuse 9', unverrückbar und fest auf der Drehflansch-Steckverbindung 2 mit dem Aufsteckflansch 2,27,27' zu halten, ist zusätzlich zu den Einraststeckern und den federbelasteten Klemmhebeln die grundsätzlich die Aufsteckung der Gehäuse gegeneinander absichern, eine horizontale Schraubsicherung vorgesehen, die in 90° zur Drehachse wirksam wird.

### Fig. 7

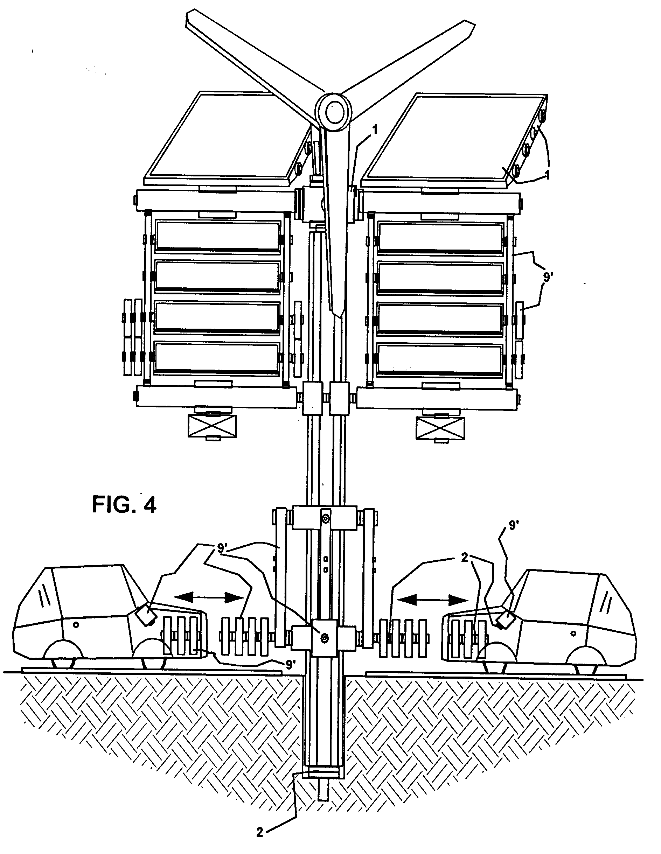

Die vorliegende, stationäre Multiblock-Robot Energiestation ist eine kombinierte Solar-Wind-Energiestation, bei der eine bestehende Wind-Energie-Anlage durch eine Multiblock Anlage nachgerüstet und in der Energieerzeugung um ein Vielfaches gesteigert wird, ohne die notwendige Größe der Aufstellfläche zu verändern oder zu erweitern. Hierzu wird der vorhandene, zylindrische Stahl-Betonmast weiterhin genutzt, der vorhandene Windrotor jedoch abgenommen und eine Drehflansch-Steckverbindung 2 auf die Mastspitze montiert, wobei der zentrale Strom- und Kommunikationskanal bis zu den vorhandenen Netzanschlußeinheiten im inneren des Mastes geführt und mit diesen verbunden wird. Diese Drehflansch-Steckverbindung 2 dient als Aufsteckwidertager für ein Multiblock-Normteil 1 mit horizontalen und vertikalen Drehflansch-Steckverbindungen 2. Auf die obere vertikale Drehflansch-Steckverbindung 2 wird ein Multiblock Normteil 1 aufgesteckt, das mit einem Flanschaufsteckgehäuse 9' mit integriertem Windrotor und mit horizontaler Rotorachse ausgerüstet ist. Die beiden horizontalen Drehflansch-Steckverbindungen 2 nehmen je einen Multiblock Gelenkrahmen auf und jeder Gelenkrahmen je zwei Multiblock Normteile 1 mit Flanschaufsteckgehäuse 9' mit integrierten Solareinheiten. Die beiden Gelenkrahmen werden durch ein Flanschaufsteckgehäuse 9' mit integrierten Dreh-Stützrollen und horizontalen Drehflansch-Steckverbindungen 27, unterhalb an dem Stahl-Betonmast drehbar geführt und abgestützt. Auf eine freie vertikale Drehflansch-Steckverbindung 27 der Dreh-Fahrwerkseinheit wird, für Anwender vom Boden erreichbar, das Flanschaufsteckgehäuse 9' mit integrierter Sensorik aufgesteckt und außerdem ein Flanschaufsteckgehäuse 9' mit integriertem Steuerungs-Computer. Die gewonnene Energie wird hier zum Teil in abgesetzt aufgestellten Multiblock-Batteriespendern gemäß der unteren Baugruppe der Fig. 4 gespeichert und darüberhinaus in das öffentliche Netz eingespeist. Die lotrechte Einschwenkung der Multiblock-Einheiten entsprechend dem jeweiligen Stand der Sonne und der jeweiligen Windrichtung erfolgt in Richtung der Bewegungspfeile. Die horizontale Einschwenkung der beiden Gelenkrahmen erfolgt durch das Multiblock Normteil 1, das auf der Stahl-Betonmastspitze aufsitzt. Die Solareinheiten werden durch die Antriebswicklungen in den zugehörigen Zentralgehäusen 9 um die eigene vertikale Achse eingeschwenkt. Die Windrotoreinheit kann durch das zugehörige Multiblock Normteil 1 unabhängig von der Einschwenkung der Multiblock Gelenkrahmen, separat eingeschwenkt und ausgerichtet werden. Bei zunehmender Windkraft, werden die Solareinheiten so eingeschwenkt, daß sie der Windkraft den geringsten Widerstand bieten. Bei stärkerer Sonnennutzung und schwachem Windaufkommen wird der Windrotor in den Zwischenraum zwischen den beiden Multiblock Gelenkrahmen eingeschwenkt um Schattenwirkung auf den Solaroberflächen auszuschließen.

### Fig. 8

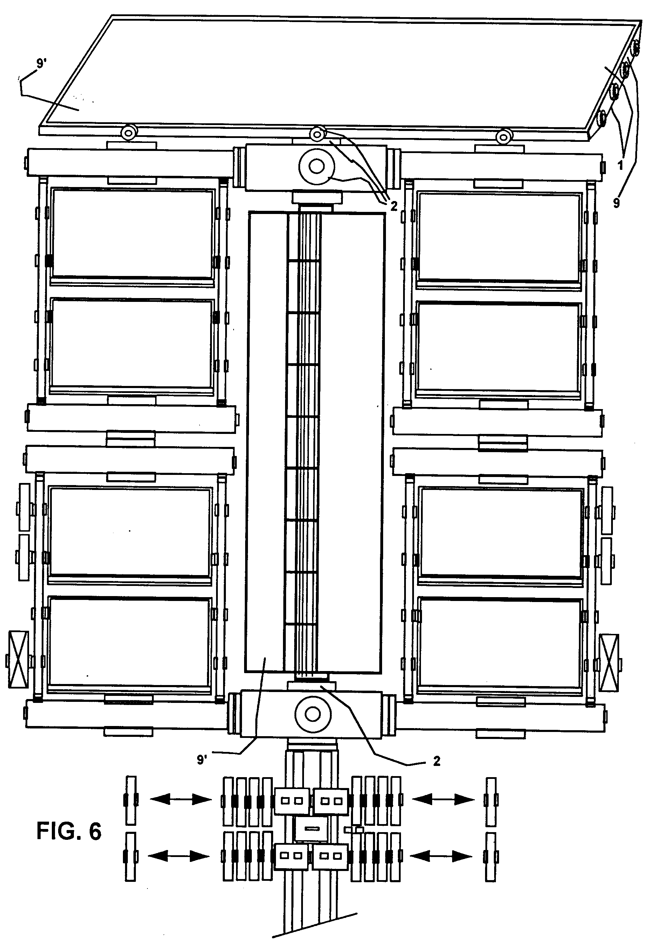

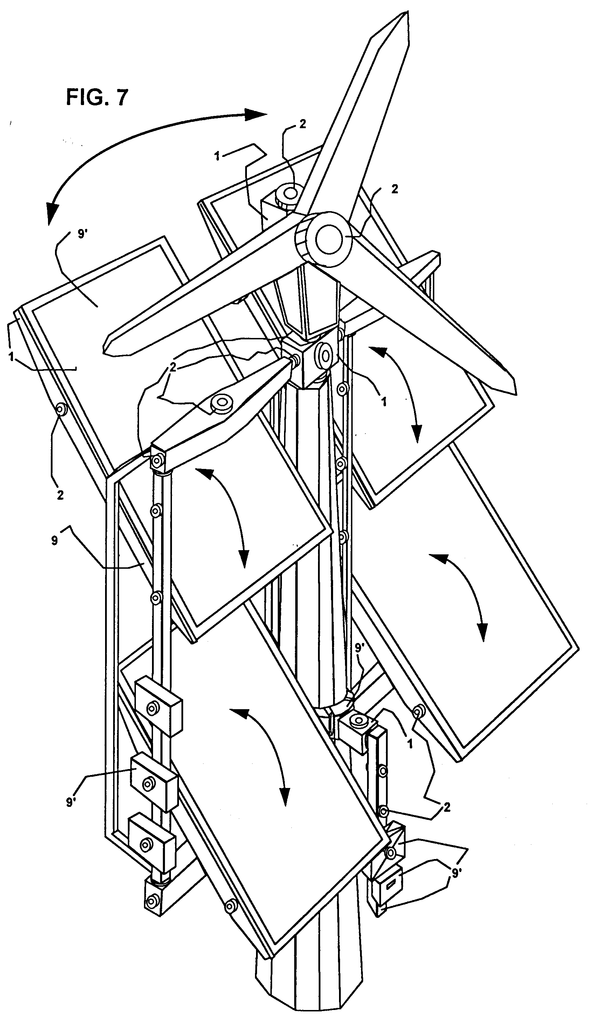

Die vorliegende stationäre Multiblock-Robot Energiestationen entspricht im prinzipiellen Aufbau den stationären Multiblock-Robot Energiestationen gemäß der Fig. 4 bis 6. Hier ist jedoch nur ein großflächiges Normteil 1 mit integrierten Solareinheiten pro Multiblock Gelenkrahmen eingesetzt. Auch die Multiblock Gelenkrahmen für Großflächige Solareinheiten sind wahlweise durch Flanschaufsteckgehäuse 9' mit integrierten Solareinheiten oder mit Windrotoren belegbar. So ist der Windrotor mit vertikaler Drehachse gemäß der Fig. 6, der dort gleichzeitig Stützenfunktion übernimmt in den Rastermaßen so ausgelegt, daß er auch in die Multiblock Gelenkrahmen der vorliegenden Ausführung oder in die Multiblock Gelenkrahme gemäß der Fig. 7 eingesetzt werden kann und hier von den Drehflansch-Steckverbindungen 2 der horizontalen Flanschaufsteckgehäuse 9' in Boden und Kopfposition aufgenommen wird. Die Solareinheiten selbst können pro Gelenkrahmen in unterschiedlicher Anzahl und unterschiedlichen Rastergrößen eingesetzt werden. Die Rastergrößen der Gelenkrahmen und Anzahl der Drehflansch-Steckverbindungen 27 werden so gewählt, daß sowohl eine Vielzahl der kleineren Solareinheiten gemäß der Fig. 1 bis 6 eingesetzt werden können, oder aber zwei oder nur eine Solareinheit, wie im vorliegenden Fall durchgeführt. Die Auswahl der richtigen Kombination aus der Vielfalt der Multiblock-Systemmöglichkeiten wird durch die regionale Lage des Aufstellungsortes, die logistischen Gegebenheiten für den Transport und die Handtierung großflächiger Solareinheiten und die Energie-Gewinnungserwartung bestimmt. Bei der vorliegenden, stationären Multiblock-Robot Energiestation ist die Energieabgabe in Form eines abgesetzten Multiblock-Batteriewechslers gelöst, der mittig in Kopfposition ein Flanschaufsteckgehäuse 9' mit integriertem Beleuchtungskörper besitzt. Die Verbindung zwischen der Energiestation und dem Batteriewechsler erfolgt durch die horizontalen Verbund-Flanschaufsteckgehäuse 9', die hier in den Boden eingelassen sind. Die Wirkungsweise, der prinzipielle Aufbau und die Batterieaustausch-Operationen entsprechen dem Batteriewechsler der Fig. 4. Im vorliegenden Fall ist jedoch der selbstoperierende Batterieaustausch sowohl für Mutliblock-Elektrofahrzeuge und für Multiblock-Roboter vorgesehen. Deshalb sind links und rechts des Flanschaufsteckgehäuses 9' mit Vertikalstützen-Funktion und aufgestecktem Multiblock-Normteil 1, um die vertikale Achse schwenkbar, je zwei Batterielinien angeordnet, die ihrerseits zusätzlich um die horizontale Achse schwenkbar sind und jede einzelne Batterielinie, dann wieder für sich um die vertikale Achse schwenkbar. Der Multiblock-Robot tauscht die Batterien ebenso selbstätig aus wie das Multiblock Elektrofahrzeug. Für den Multiblock-Robot sind die links eingesetzten zwei Batterielinien des Batteriewechslers um 180° eingeschwenkt und dadurch genau in der Austauschhöhe für den Multiblock-Robot, der über das gespeicherte Programm des zentralen Steuerungs Computers des Robots für den Batterieaustausch, auf die bereitgestellte Batterielinie geradlinig zufährt und ohne zusätzliche Arm- oder andere Bewegungs-Operationen den Austausch, analog den Batterie-Aufsteck-Operationen wie für das Multiblock Elektrofahrzeug,den Batterieaustausch durchführt. Der Multiblock-Robot ist beidseitig mit Flanschaufsteckgehäuse 9' mit integrierten Batterieeinheiten bestückt. Da hier das gesamte Oberteil über Drehflansch-Steckverbindungen 2 des zugehörigen Multiblock Normteiles 1 um 360° schwenkbar ist, kann der beidseitige Batterieaustausch erfolgen, ohne daß der Robot eine Gesamtdrehung um die eigene Achse durchführt. Der Multiblock Robot ist wie das Multiblock Elektrofahrzeug und der Multiblock Batteriewechsler mit Flanschaufsteckgehäusen 9' mit integrierten Infrarot Bewegungssensoren und Flanschaufsteckgehäusen 9' mit integrierter Antennen- und Fernsteuersignaleinheit ausgerüstet. Der Multiblock-Batteriewechsler hat, wie die stationäre Multiblock-Energiestation, über die Drehflansch-Steckverbindungen 2 im Fundamentbereich, Verbindung zum öffentlichen Netz. Multiblock-Batteriewechsler lassen sich, ebenso wie Multiblock-Batteriespender, mit den mobilen Multiblock-Energiestationen, entsprechend der Fig. 1 bis 3 kombinieren.

### Fig. 9

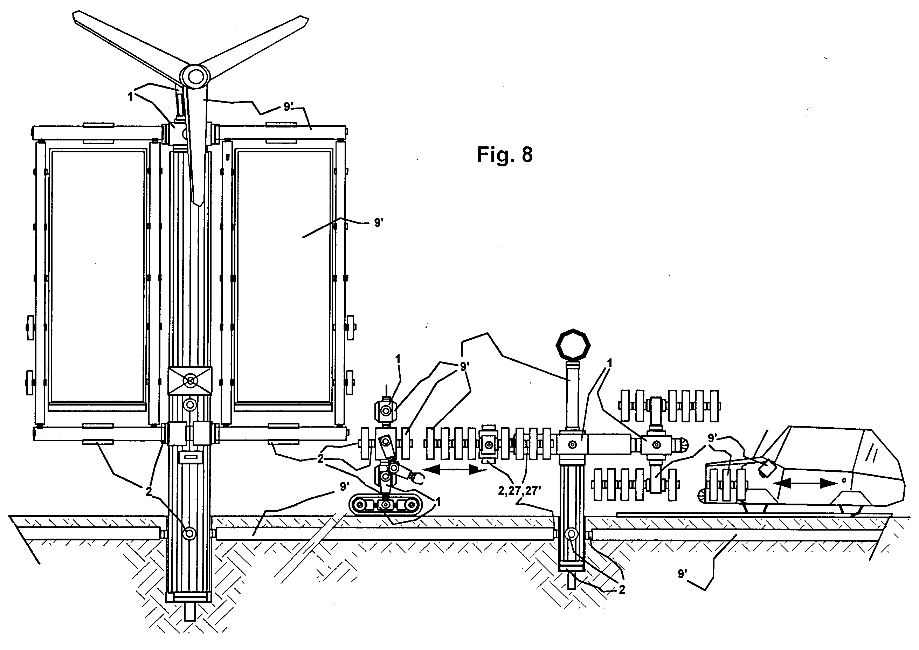

Die vorliegende stationäre Multiblock-Robot Energiestationen ist eine kombinierte Solar-Wind-Energie Anlage, bei der eine bestehende Wind-Energie-Anlage durch eine Multiblock Anlage nachgerüstet wird und prinzipiell dem System gemäß der Fig. 7 entspricht. Hier werden jedoch ebenfalls einteilige, großflächige Solareinheiten pro Multiblock Gelenkrahmen eingesetzt wie gemäß der Ausführung in Fig. 8. Die Multiblock-Gelenkrahmen mit nur einem Flanschaufsteckgehäuse 9' mit integrierter Solareinheit pro Multiblock Gelenkrahmen können auch hier jederzeit durch eine Vielzahl von Flanschaufsteckgehäusen 9' mit integrierten Solareinheiten ausgetauscht werden oder gegen Flanschaufsteckgehäuse 9' mit integrierten Windrotoren mit vertikaler Rotorachse und gleichen Rastermaßen wie die Flanschaufsteckgehäuse 9' mit integrierten Solareinheiten. Die Flanschaufsteckgehäuse 9' mit integrierter Sensorik und das mit integrierter Steuerungs-Computereinheit, sind hier seitlich auf die Drehflansch-Steckverbindungen der vertikalen Flanschaufsteckgehäuse 9' der Multiblock Gelenkrahmen aufgesteckt. Abgesetzte Multiblock-Batteriespender und Batteriewechsler sorgen hier für die optimale Energieabgabe an Benutzer. Überschüssige Energie wird an das öffentliche Netz abgegeben.

## Patentansprüche

1. Multiblock-Robot System, dadurch gekennzeichnet, daß Multiblock Normteile (1) gebildet werden die aus Flanschaufsteckgehäusen (9') mit integrierten Solareinheiten und Aufsteckflanschen (27,27') bestehen und auf Zentralgehäuse (9) aufgesteckt werden, die Einbauelemente der Solarelektronik und Spannungswandlern beinhalten und an den Außenkanten und auf der Rückseite mit Drehflansch-Steckverbindungen (2) ausgerüstet sind, daß die Multiblock Normteile (1) mit Solareinheiten und Multiblock Gelenkarmen kombiniert werden, mit Flanschaufsteckgehäusen (9') mit zentraler, vertikaler Stützfunktion, mit horizontalen Verbund-Flanschaufsteckgehäusen (9'), mit Multiblock Gelenkrahmen die aus Flanschaufsteckgehäusen (9') mit Aufsteckflanschen (27) horizontal und vertikal zueinander zusammengesteckt werden, außerdem mit Flanschaufsteckgehäusen (9') mit integrierten Batterieeinheiten, die hintereinander aufgesteckt werden, Batterielinien bilden und sich selbstätig durch Magnetschalter in den Drehflansch-Steckverbindungen (27,27') beim Batterieaustausch entriegeln und verriegeln, mit Multiblock-Batteriespendern und mit Multiblock-Batteriewechslern die eine Vielzahl von Batterielinien aufnehmen, die außerdem mit Flanschaufsteckgehäusen (9') mit integrierten Beleuchtungskörpern kombiniert werden, außerdem mit Flanschaufsteckgehäusen (9') mit integrierten Windrotoren mit horizontaler und vertikaler Drehachse, außerdem mit Flanschaufsteckgehäusen (9') mit integrierter Steuerungs-Computereinheit und mit Flanschaufsteckgehäusen (9') mit integrierter Sensor- und Steuerungselektronik und in der Kombination Einzelner oder Vielfacher dieser Multiblock Komponenten, durch Aufstecken auf die gegenseitigen Drehflansch-Steckverbindungen (2,27,27'), autonome, selbststeuernde Multiblock-Energiestationen für Solar- und Wind-Energiegewinnung, Speicherung und Energie-Abgabe bilden, die sich selbstätig mit den Solaroberflächen und den Wind-Rotorblättern immer lotrecht zum jeweiligen Sonnenstand und der jeweiligen Windrichtung ausrichten.

2. Multiblock-Robot System nach Anspruch 1, dadurch gekennzeichnet, daß die Multiblock-Energiestationen mit Multiblock-Normteilen (1) und Flanschaufsteckgehäusen (9') kombiniert werden, die Rad- und Gurtfahrwerkseinheiten integrieren und mit Flanschaufsteckgehäusen (9') mit integrierten Bewegungs- und Bilderkennungs- und Infrarot Steuerungssensoren und mit Flanschaufsteckgehäusen (9') mit integrierter Antennen- und Fernsteuersignaleinheit und eine mobile, ortsveränderliche, lokal und ferngesteuerte, selbstoperierende Multiblock-Energiestation bilden.

3. Multiblock-Robot System nach einem der Ansprüche 1 oder 2, dadurch gekennzeichnet, daß die Multiblock Gelenkrahmen wahlweise eine Vielzahl von Flanschaufsteckgehäusen (9') mit Solareinheiten aufnehmen, die in den Multiblock Gelenkrahmen auf die Drehflansch-Steckverbindungen (27) aufgesteckt sind und übereinander, versetzt angeordnet, individuell und einzeln einschwenkbar, eine treppenförmige Gesamtkontour in der Seitenansicht bilden.

4. Multiblock-Robot System nach einem der Ansprüche 1 bis 3, dadurch gekennzeichnet, daß Drehflanschsteckverbindungen (27) in Fundamente eingesetzt werden und eine Verbindung zwischen den zentralen Strom- und Kommunikationskanälen zum öffentlichen Stromnetz hergestellt wird und darauf Multiblock Flanschaufsteckgehäuse (9') mit vertikaler Stützenfunktion aufgesteckt werden die dicht über dem Boden, für Benutzer und Multiblock-Roboter erreichbar, um die Mittelachse schwenkbar, übereinander und nebeneinander, in Multiblock Gelenkrahmen, Multiblock-Batteriespender aufnehmen, die optische Ladestandsanzeigen für jede Batterielinie besitzen und Flanschaufsteckgehäuse (9') mit integrierter Steuerungs-Computereinheit mit einem für die Benutzer erreichbaren Scheckkartenleser und daß nach Scheckkarteneingabe und Vergleich des Benutzer Codes, die Aufsteckung leerer Batterieeinheiten durch Magnetschalter-Entriegelung der Einraststecker und federbelasteten Klemmhebel der Drehflansch-Steckverbindungen (27,27') und die Entnahme aufgeladener Batterieeinheiten durch die Benutzer erfolgt und daß über der Multiblock Batteriespender-Baugruppe weitere Multiblock Baugruppen, bestehend aus der wahlweisen Kombination von Multiblock Solar-Baugruppen und Multiblock Windrotor Baugruppen angeordnet sind, die abgesetzt, alleinstehend, oder in mehrfacher Kombination an Straßenrändern, Plätzen und Tankstellen aufgestellt sind und für Elektrofahrzeuge und selbstoperierende Roboter verfügbar sind.

5. Multiblock-Robot System nach einem der Ansprche 1 bis 4, dadurch gekennzeichnet, daß Multiblock-Batteriespender, abgesetzt von den ortsfesten Multiblock-Energiestationen eingesetzt werden und zusätzlich selbstoperierende Multiblock-Batteriewechsler und die Verbindung zwischen der Energiestation und den Batteriespendern und Batteriewechslern, durch horizontale Verbund-Flanschaufsteckgehäuse (9') erfolgt, die in den Boden eingelassen sind und außerdem über Drehflansch-Steckverbindungen (2,27,27') im Fundament, die Verbindung zum öffentlichen Netz hergestellt ist, daß die Batteriewechsler selbstoperierend den Batterieaustausch sowohl für Mutliblock-Elektrofahrzeuge und für Multiblock-Roboter durchführen und hierfür links und rechts des Flanschaufsteckgehäuses (9') mit Vertikalstützen-Funktion und aufgesteckten Multiblock-Normteilen (1) und Flanschaufsteckgehäusen (9'), Batterielinien aufnehmen die mehrachsig eingeschwenkt werden, wobei Multiblock-Robots und Multiblock Elektrofahrzeuge für den selbstoperierenden Batterietausch vorgerüstet sind und mit Flanschaufsteckgehäuse (9') mit integrierten Batterieeinheiten ausgeführt sind, die zu Batterielinien zusammengesteckt sind und daß außerdem die integrierten Multiblock-Steuerungs-Computer mit einem Scheckkarten-Leser ausgerüstet sind, der dem Scheckkartenleser der Multiblock-Energiestationen entspricht, und daß Flanschaufsteckgehäuse 9' mit integrierter Antennen- und Fernsteuersignaleinheiten vorgesehen sind, die mit den Einheiten der Multiblock-Energiestationen identisch sind, daß der Batterieaustausch selbstätig, infolge der Steuersignalverarbeitung der eingegebenen Benutzer-Scheckkarten und der Roboter-Steuerprogramme erfolgt, wobei die Multiblock-Robots und die Multiblock-Elektrofahrzeuge selbstätig vor- und zurück bewegt werden und genau positioniert und geleitet von den Infrarot- und Bewegungssensoren und Telecommandos, auf die Drehflansch-Steckverbindungen (27) der Batterielinien des Batteriewechslers zugeführt werden und ein selbstätiges Einschwenken der Batterielinien für Aufnahme und Aufstecken der aufzuladenden Batterieeinheit und Weiterschwenken zur Freigabe und Abziehen der aufgeladenenen Batterieeinheit erfolgt und daß der Batterieaustausch, das Aufstecken und die Abnahme einzelner Batterieeinheiten oder eines Batterieblocks mit mehrerern Einheiten gleichzeitig, durch Magnetschalter-Entriegelung und Verriegelung der Drehflansch-Steckverbindungen (27) der einzelnen Batterieeinheiten oder eines Batterieblocks erfolgt und daß die Multiblock-Roboter und die Multiblock-Elektrofahrzeuge für die Benutzer, für weitere Operationen und zur Weiterfahrt erst dann freigegeben werden, wenn der Batterieaustausch erfolgreich durchgeführt wurde und dies bei Multiblock-Elektrofahrzeugen, im Fahrzeuginneren akkustisch und optisch angezeigt wird.

6. Multiblock-Robot System nach einem der Ansprüche 1 bis 5, dadurch gekennzeichnet, daß an der Mastspitze von systemfremden Stahlbeton oder Stahlmasten, eine Drehflansch-Steckverbindung (2,27,27') als Widerlager für ein zentrales Multiblock Normteil (1) befestigt wird und der innen geführte Strom- und Kommunikationskanal zur Verbindung mit dem öffentlichen Netz, bis zum Boden geführt wird und daß in Kopfposition auf die dort befestigte Drehflansch-Steckverbindung (2,27,27'), ein Multiblock Normteil (1) mit horizontalen und vertikalen Drehflansch-Steckverbindungen (2,27,27') aufgesteckt wird und Kombinationen von Multiblock Solar-, Wind- und Batterie-Baugruppen, Multiblock-Gelenkrahmen und systemergänzende Multiblock Normteile (1) und Flanschaufsteckgehäuse (9') aufnimmt und die Gesamteinheit an Multiblock-Baugruppen, Normteilen (1) und Flanschaufsteckgehäusen (9') über das Multiblock Normteil (1) an der Mastspitze, selbstoperierend, frei schwenkbar ist und an Flanschaufsteckgehäusen (9') mit integrierten Drehfahrwerken in Bodennähe des Mastes geführt wird und daß so nachgerüstete, ortsfeste Energiestationen, abgesetzte Multiblock-Batteriespender und Multiblock-Batteriewechsler versorgen.
